# EUROPEAN PATENT APPLICATION

(11) **EP 0 952 732 A2**
(43) Date of publication of application: **27.10.1999**
(21) Application number: 99302915.6
(22) Date of filing: 15.04.1999
(51) Int. Cl.: H04N 5/00

(54) **System and method for selecting and accessing portions of information streams from a television**

(30) Priority: 21.04.1998 US 63803
(71) Applicant: International Business Machines Corporation, Armonk, N.Y. 10504 (US)
(72) Inventor: Chen, Jeane, Chappaqua, NY 10514 (US); Janniello, James P., Stamford, CT 06905 (US); Pence, William Edward, New York, NY 10010 (US); Yeo, Boon-Lock, Sunnyvale, CA 94086 (US)
(74) Representative: Zerbi, Guido Maria

(57) **Abstract**

An improved television is capable of demultiplexing, selecting and distributing information streams of different types of information to the television and to one or more television companion devices (TCDs). The television has a television antenna for receiving a broadcast signal having one or more types of information. Each information type has one or more segments. The television further has a transmitter for transmitting a communication signal to one or more television companion devices. The types of information can include any one or more of the following: a video channel, an audio channel, a data channel, one or more graphical images, and/or one or more animated images. The segments can include any one or more of the following: an audio clip or audio program, a video segment or video program, a still image, animation, graphics, 3D images, and/or a stream of text. The television communicates with the TCDs via a communication link. When the television communicates with the TCDs, it embeds an address into the message which identifies one or more of the TCDs to be the recipient of the message. Information streams and segments which are to be cutput by the television and/or one or more TCDs are selected by a selector that selects two or more segments from one or more of the types of information where one or more of the segments is displayed, e.g. on the television, and one or more of the segments are transmitted to one or more television, companion devices. In an alternative embodiment, if the automatic selection of information is desired, a Profile Subsystem which contains a profile of profile items in a database of information of interest to the viewer will control selection of one or more of the segments if the segments contain one or more profile items.

## Description

### Field of the Invention

This invention relates to the area of digital televisions. More specifically, this invention relates to selecting and accessing different portions of an information stream from a digital television.

### Background of the Invention

Analog television in the United States and elsewhere in the world is one of the most effective means of communication and entertainment, yet it has undergone relatively little advancement in recent years in comparison to other electronic technologies. Its principal capability has been to distribute individual channels of moving images and sound to millions of viewers around the world. It has not, however, exploited the phenomenal technical advances of the past twenty-five years nor the wealth of information now available electronically. We are now on the verge, however, of enabling these advances with the introduction of digital television.

Recently, webTV enabled the browsing of web pages and the display of them on a traditional television set. The television can be used for web browsing or program viewing, but cannot be used for both operations simultaneously. In both cases, the viewing is done in a communal manner, i.e. all viewers get the same information. Recently, some broadcasters have coordinated the simultaneous broadcasting of a particular program and the serving of associated information on the internet. Once again, this is done in a principally communal environment.

Soon, digital television will enable the distribution of auxiliary information with a video broadcast. With this technology, a video signal can be digitized, packetized and multiplexed with one or more audio signals and one or more data channels. The data channels can be closely related to the associated video or may be completely unrelated. These multiplexed signals are referred to as a program. Additionally, many programs can be multiplexed into a single Transport Stream. The resulting signal can be distributed to television viewers through either a terrestrial broadcast, a CATV network or other network. Once received, the television can demultiplex the video, audio and auxiliary information and output it on the TV's screen and/or speakers.

Today, selection of the program content to be viewed on a television is accomplished by a channel selector. It selects the VHF or UHF channel which the television will tune to and can often be controlled by a remote control device. In this capacity, the selector selects one video signal and one or more channels of audio. In addition, today s VCRs can be programmed to select a particular channel at a scheduled time in the future. Televisions do not typically have this feature.

A television also uses many of the various types of wireless technologies currently available (TV remote controls, broadcast signals, etc.). The broadcast signal is an example of a signal modulated to create a radio frequency signal which can be transmitted through the air. The television receives and demodulates this signal to create the original baseband signal. Television remote controls often modulate a signal on an infrared light to transmit information through the air. In this case, the television receives and demodulates the signal to create the original baseband signal. Cable TV is an example of signals which have been modulated to a radio frequency and then transported over a coaxial cable. Once again, a television demodulates the signal to create the original baseband signal. In some cases, cable television networks modulate a laser or light emitting diode to transport the signal over a fibre optic cable. In this case, a photo detector is used to enable the recreation of the original broadcast signal.

Originally, a television was defined as a device capable of receiving an analog broadcast signal over a VHF or UHF channel and selectively displaying one video signal together with its associated audio signal. Today, the signal received can come from a cable TV network, a terrestrial broadcast, a video tape recorder or camera, a computer network or other video source. As the television merges with other devices, such as personal computers, it will require an even broader definition. In this instance, a more appropriate definition is a device which receives a signal consisting of one or more video channels and one or more types of information streams including audio, data, text and graphics and which outputs one or more of these streams.

The signals output on a television today can include video, audio and data. The audio output is typically amplified by an audio amplifier and then sent to a pair of headphones or one or more speakers. The video is most often displayed on a cathode ray tube, but it may also be displayed by a projection system or on a flat panel display. This latter technology includes the relatively new thin-film transistor displays. Text characters are also often overlayed on the video to display the time of day, selected channel, closed caption text or other information. Typically, one video stream, one text stream and multiple audio streams are output.

Many televisions today contain processors of different types: video processors, digital signal processors, etc. Televisions are beginning to merge with personal computers and contain subsystems that look like PCs. This may include a processor IC, static ram, dynamic ram, interrupt handlers and other peripheral devices normally associated with a computer. Thus, many of the applications which PC users have enjoyed will be available in the television system, including the capability to exchange messages and play computer games.

Digital television provides for the simultaneous broadcast of both a television program and associated data. The data can be displayed with or overlayed on the broadcast video. This technology, however, indiscriminately forces all viewers to see the same information and only the information chosen by the broadcaster. Thus, while one viewer of a football game on television may be interested in statistics and another viewer is interested in the scores of other games, both viewers are forced to view the same information. In addition, only information chosen by the broadcaster may be accessed by the viewer.

The Internet, alternatively, provides access to vast amounts of information. While Web browsers such as WebTV can provide access to this information, they do not provide access to information distributed with the video broadcast if that information was not obtained from the internet. They also provide a principally communal viewing experience for the accessed information. In other words, all people in the room viewing the TV see the entire amount of information shown on the screen whether that information comes from the broadcaster or the Internet.

Unfortunately, neither of these systems provides customized, individual viewing of the auxiliary information available. The prior art systems also fail to provide simultaneous access to both the digital television broadcast and the Internet. Therefore certain entertainment and economic value of television broadcasting is not exploited by the prior art.

It is an object of the present invention to provide a technique which alleviates the above drawbacks.

### Summary of the Invention

According to the present invention we provide a television comprising: a television receiver for receiving a broadcast signal having one or more types of information, each information type having one or more segments; and a television transmitter for transmitting a send signal to one or more television companion devices.

Also according to the present invention we provide a television system comprising: a television comprising: a television receiver for receiving a broadcast signal having one or more types of information, each information type having one or more segments; and a demultiplexer that demultiplexes the broadcast signal into one or more of the types of information; a selector that selects one or more segments from one or more of the types of information; and a television transmitter capable of transmitting one or more of the segments to one or more television companion devices; one or more television companion devices (TCDs) comprising: a communication interface capable of receiving a signal from a television set; an output that presents one or more of the segments.

This invention is an improved television which is capable of demultiplexing, selecting and distributing information streams of different types of information to the television and to one or more television companion devices (TCDs). The television has a television receiver for receiving a broadcast signal having one or more types of information. Each information type has one or more segments. The television further has a transmitter for transmitting a communication signal to one or more television companion devices.

The types of information can include any one or more of the following: a video channel, an audio channel, a data channel, one or more graphical images, and/or one or more animated images. The segments can include any one or more of the following: an audio clip or audio program, a video segment or video program, a still image, animation, graphics, 3D images, and/or a stream of text. The television communicates with the TCDs via a communication link which can be any one or more of the following: an infra red link, a radio link, a fibre optic link, and a coaxial link. When the television communicates with the TCDs, it embeds an address into the message which identifies one or more of the TCDs to be the recipient of the message. Information streams and segments which are to be output by the television and/or one or more TCDs are selected by a selector that selects two or more segments from one or more of the types of information where one or more of the segments is displayed, e.g. on the television, and one or more of the segments are transmitted to one or more television companion devices.

In an alternative embodiment, if the automatic selection of information is desired, a Profile Subsystem which contains a profile of profile items in a database of information of interest to the viewer will control selection of one or more of the segments if the segments contain one or more profile items. In addition, an Information Processor will process the received information streams and segments to identify streams of interest to the viewers. In this case, the audio segments are processed by any one or more of the following methods: using speech recognition to generate a searchable transcript for key word searching, audio processing to determine the type of audio including any one or more of the following: speech, music, noise, sounds, and speaker identification processing to determine the identity of a particular speaker. The video segments are processed by any one or more of the following methods: using image processing to identify a searchable person, place, thing, action, or event. The data segments are processed by any one or more of the following methods: using text processing to generate a searchable hit list of one or more words. The Information Processor will generate identifiers from the processed segments and the identifiers will be used by the Profile Subsystem to control the selection of the information streams.

### Brief Description of the Drawings

The foregoing and other objects, aspects and advantages will be better understood from the following detailed description of preferred embodiments of the invention with reference to the drawings that are include the following:
Figure 1 is a block diagram of an improved television system using a television companion device;
Figure 2 is a block diagram of an improved television;
Figure 3 is a block diagram of a preferred television companion device;
Figure 4 is a block diagram of a Profile Subsystem;
Figure 5 is a flow chart of a selection process; and
Figure 6 is an example of a profile configured with profile items.

### Detailed Description of the Invention

With the advent of digital television, broadcasters will no longer be limited to broadcasting a single program of video and audio. They will soon have the ability to transmit multiple programs of audio, video, data and other information to the viewer. To capitalize on these new capabilities, a new television system is needed to facilitate the viewing of this information.

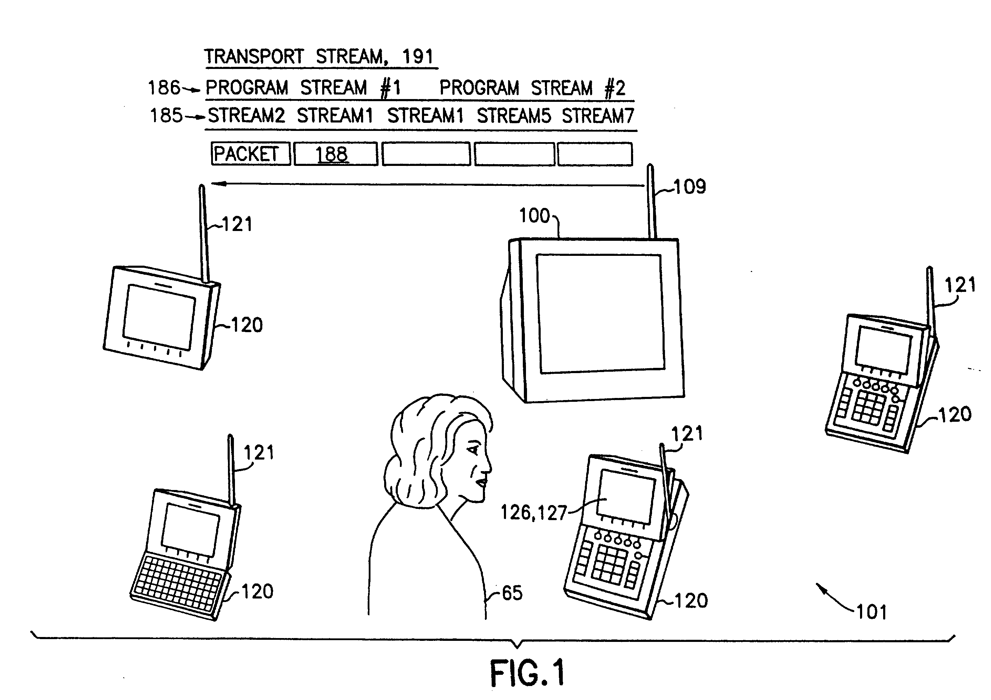

Figure 1 is a block diagram of a novel television system 101 with various embodiments of the television companion device (TCD) 120. In this system 101, the television 100 presents content to the general viewing audience 65 and communicates with a number of television companion devices 120 via a communication link (109, 121). In one preferred embodiment, the TCDs 120 are handheld devices used to present individual, customized information to viewers. In alternative embodiments, e.g. in a teleconferencing room or in a bar, the TCDs 120 can be mounted into a terminal, e.g. a table or desk, provided to each viewer 65. The goal here is to identify, select and view information streams of interest to the general viewing audience 65 (television) and for each individual 65 (holder/user of a TCD). This will help the viewers (e.g. multiple numbers of 65) find and view the streams which have the highest entertainment or informational value to both the general audience 65s and the individual viewer 65.

The information streams 185 are audio (e.g., English and/or Spanish commentary of a soccer game), video (e.g., the moving images of the soccer game), data (e.g. statistics on the players), graphic (e.g. graphs of the statistics), still image (e.g., portraits of the players) or animation streams (e.g. computer generated videos diagramming and explaining a play in the game) broadcast over a television network. In a preferred embodiment, these information streams, or streams, typically 185, comprise a plurality of byte packets, typically 188, as specified in the MPEG-2 specification. In a preferred embodiment, they are time multiplexed together to create a Program Stream, typically 186. One or more Program Streams 186 can then be multiplexed together to create a Transport Stream (TS) 191 that is transmitted from the broadcaster. (A well known Program Identifier (PID) is used to identify each of the information streams 185 within the TS 191.) In Digital Television, the Transport Stream 191 is broadcast to the viewer 65 on a VHF or UHF channel.

As stated above, some of the important operations are the identification, selection and presentation of the information streams 185 to the audience (65s). Although the television 100 must perform the selection for the general viewing audience 65s, the streams of interest 185 to the individual viewers 65 can be selected by the television 100 and/or the TCDs 120. As described below, the selection process can be executed automatically or can require manual intervention by the viewer 65. Once selected, the streams 185 for the general viewing audience 65s are output on the television 100. The streams 185 selected for the individual viewers 65s are transmitted by the television 100 to the TCDs 120 where they are output on a TCD output (125-127), e.g. an optional display device (126-127) and/or output on an optional audio device (125).

The information streams 185 which are to be output on either the television 100 or TCD 120 must first be identified and selected. A preferred embodiment of this system includes a novel Selector (104 and 124 below) which provides for the intelligent selection of streams 185 for a television 100 and/or TCDs 120. Since either the television 100 and/or the TCD 120 may perform the selection, the selector (104/124) can be used in either or both devices (100/120). In one preferred embodiment, the television 100 and the TCD 120 contain a selector (104/124). Thus, the television 100 has the option of broadcasting all received streams 185 to all the TCDs 120, a subset of the streams 185 to all the TCDs 120, a subset of the streams 185 to a subset of the TCDs 120, or only selected streams of interest 185 to particular TCDs 120. In one preferred embodiment, e.g. during a particular time of day, only the TV Selector 104 selects the selected streams 185 and selects the subset of TCDs 120 to receive these selected streams. For instance, using this embodiment, a parent could limit information (stream 185) access by a child using the TCD 120. In an alternative embodiment, the TV 100 sends all streams 185 to all TCDs 120. Here only the TCD 120 Selector 124 selects streams of interest 185 to display to each particular user 65 on the respective TCD output (125-127). One application for this embodiment would be a public setting, e.g. a bar, with a large number of TCD users 65, each interested in specific statistics selected from a large number of statistical streams 185 about one or more games being viewed communally on the TV 100. In still another preferred embodiment, both the TV 100 and one or more of the TCDs 120 does the selection. In this case, the TV selects subsets of streams 185 to transmit to one or more subsets of TCDs 120. Then the TCDs 120 will perform an additional selection of the incoming streams 185 to select the exact streams of interest for each particular viewer 65. In this embodiment, the TV 100 selects basketball game streams 185 and baseball game streams 185 from all the sports streams 185 received by the TV 100. Then each individual TCD 120 user 65 selects which of the basketball/baseball games and/or statistics he wishes to view.

The communication link between the television 100 and the TCD 120 can utilize a number of different technologies. In some implementations of the improved television system, the TV Transmitter 108 and TCD Receiver 128 (the communication link) can be radio frequency transmitters and receivers (with respective TV antenna 109 and TCD antenna 121), fibre optic transmitters and receivers or coaxial drivers and receivers. In the former case, the signal will be transmitted through the air as in the case of the radio frequency broadcast described above. In the latter cases, either a fibre optic or coaxial cable will transport the Comm Signal 140 from the Television 100 to the TCD 120. These technologies are well known.

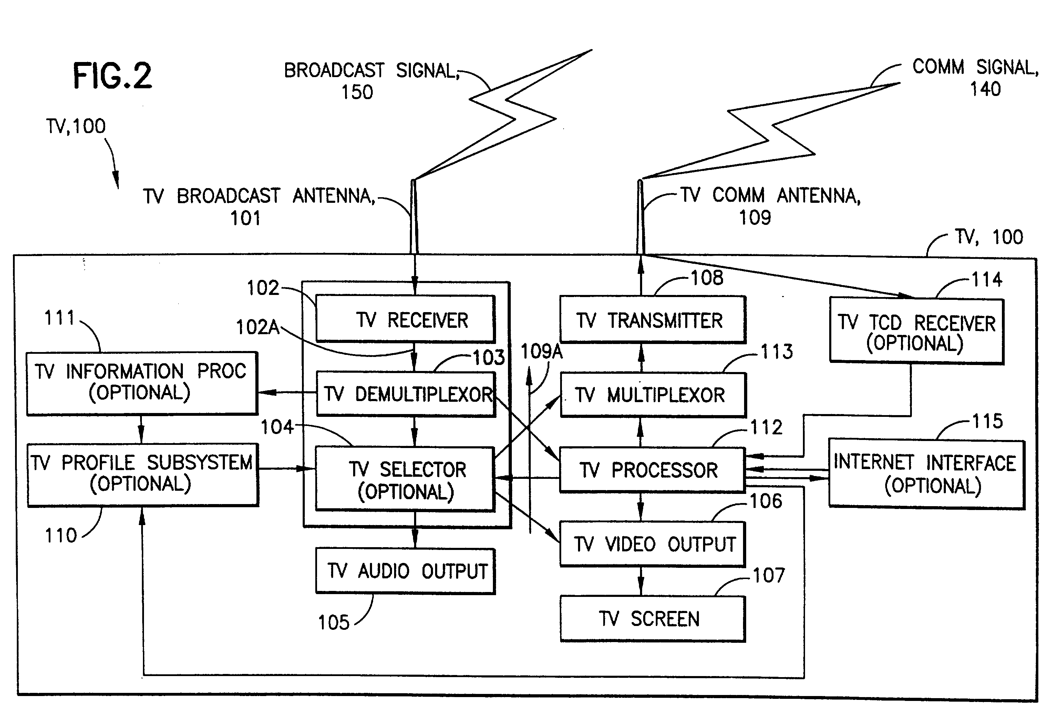

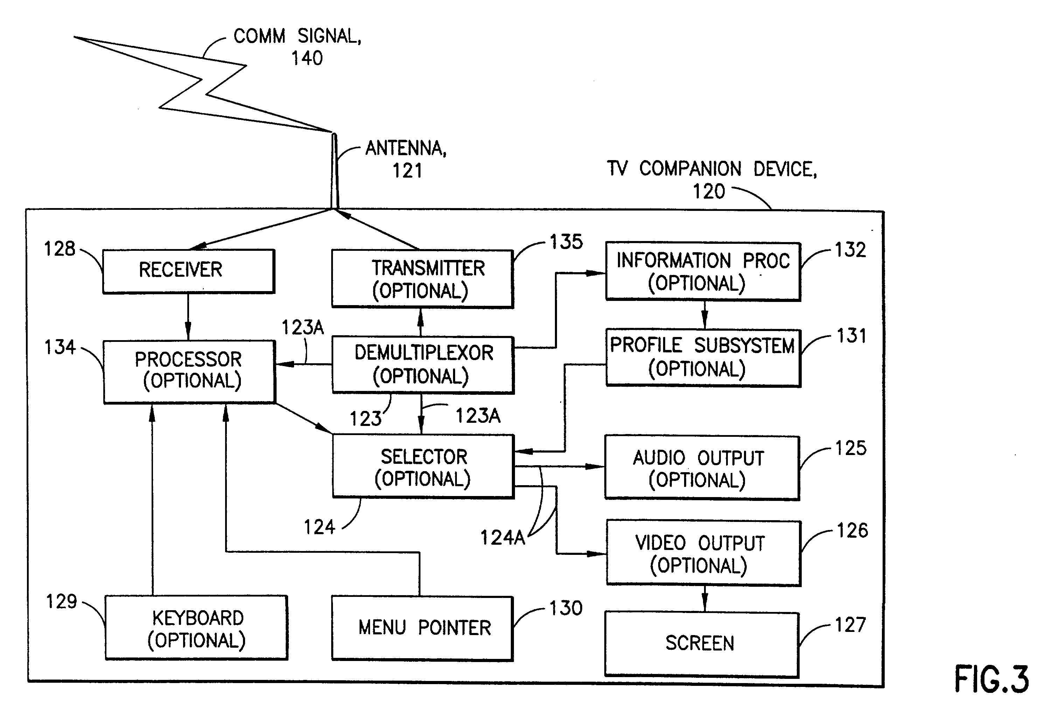

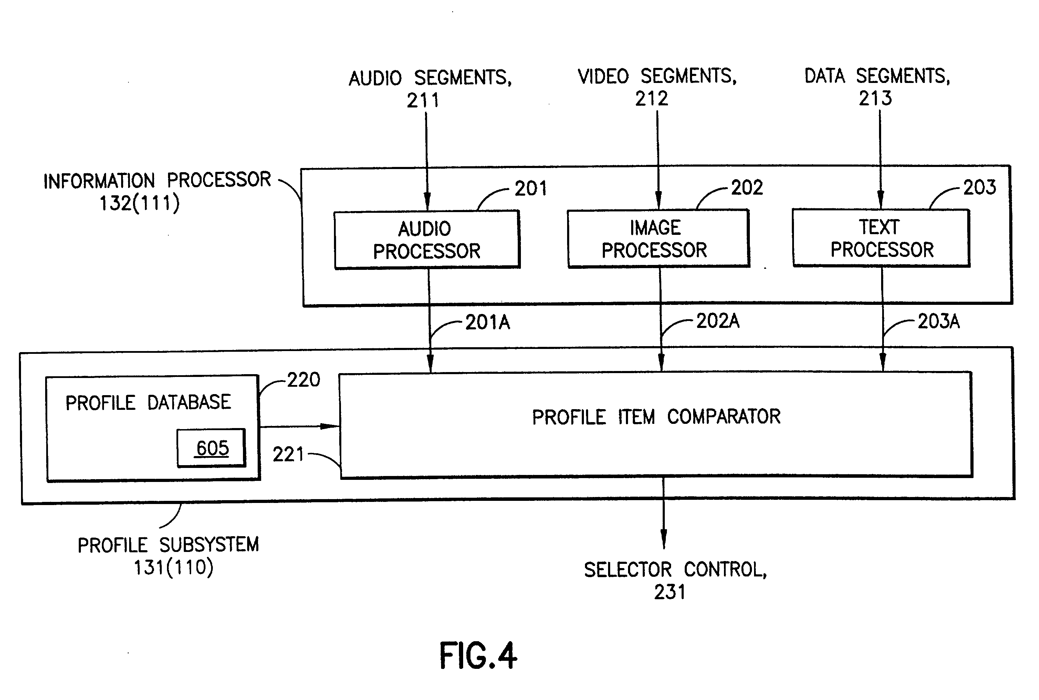

Figure 2 is a block diagram of the novel TV 100 and Figure 3 is a block diagram of the Television Companion Device (TCD) 120 showing more detail. The TV 100 contains a known Broadcast Antenna 101 used to receive a known terrestrial Broadcast Signal 150. In one preferred embodiment, the Broadcast Signal 150 is a digital signal-which has been RF modulated using a known 8 Vestigial Side Band (VSB) modulator and then transmitted in the 6 MHz bandwidth of a traditional VHF or UHF channel. Typically, each VHF or UHF channel will contain one digital signal of up to approximately 20 Mbps. In an alternative embodiment, there is no antenna; the signal is received over a coaxial cable or other transmission technology. This digital signal comprises different types of time-multiplexed information streams 185 including any one or more of the following: one or more video streams, one or more audio streams (channels) and one or more data streams (channels). Each of these types of streams 185 can be further divided into segments (see Figure 4) where each segment comprises a beginning, middle and end of any of the following: a video clip or program, an audio clip or program and a data segment. The streams and segments are time multiplexed together to create the digital signal 102A. These streams and segments are well known.

After being received by the Broadcast Antenna 101, the signal 150 is demodulated by the TV Receiver 102. This will recreate 102A the original broadcast digital signal comprising time multiplexed video streams, audio streams, and/or data streams 185. In high-end televisions, the TV Receiver 102 will be capable of demodulating multiple signals, thereby allowing the Television 100 to simultaneously select information streams 185 from different broadcast channels. The TV Demultiplexor 103 will demultiplex the video, audio and data streams 185 from the digital signal 102A into individual segments of video, audio and/or data 109A. Integrated circuits are currently available which will multiplex and demultiplex the transport streams 191 into a small number of individual information streams 185. They utilize the PID of each stream 185 to identify whether the stream 185 is audio, video or data. Some embodiments of the improved television system 100 will require a Demultiplexor 103 which can output a large number of streams 185 simultaneously. This is done by cascading knowing Demultiplexors using known techniques.

Once demultiplexed, the TV Selector 104, if used, will then select one or more stream(s) 185 to be optionally output on the TV 100 itself and to be sent to one or more TCDs 120 (through a novel TV Multiplexor 113 (below), TV transmitter 108 and a TV communication output, e.g., Antenna 109. The TV Selector 104 is a specialized device which is capable of selecting one or more information streams 185 from a multitude of input information streams 185 received from the TV Demultiplexor 103. The TV Selector 104 is described in detail below.

As the streams 185 are received, the optional TV Processor 112 will search the data within the streams 185 to locate important information such as the title of a video segment, etc. This information can then be displayed by the TV Processor 112 on the TV Screen 107 to inform viewers 65 of the existence of other information streams 185 which they may choose to select. The TV Processor 112 will generate menus which the viewer 65 can have displayed on either the TV Screen 107 or the TCD Screen 127. If the menu is to be displayed on the TCD Screen 127, the TV Processor 127 will send the menu to the (TCD) Processor 134. This send operation is described later. As described below, the Menu Pointer 130 can be used to highlight an item in the menu and thereby select an information stream 185 for output on either the TV 100 or TCD 120.

The data, audio and/or video streams 185 selected for the Television 100 will be sent to the TV Video Output 106 for display on the TV Screen 107 (optional). In this embodiment, an MPEG-2 video decompression IC is used to decompress the video stream and create an analog video signal which can be easily displayed using known video output devices. The TV Screen 107 can be a CRT, a flat panel display, a projection display, a thin film transistor (TFT) panel or any other type of graphical display. The selected audio channel(s) will be optionally sent to the known TV Audio Output 105 to be output on TV speakers or headphones. The TV Receiver 102, TV Demultiplexor 103, TV Audio Output 105, TV Video Output 106, and TV Screen 107 are well known.

The TV Selector 104 itself is used in a new way to provide selected streams and/or segments 109A to the TV 100 and/or the TCDs 120. The Selector 104 will receive demultiplexed information streams 185 from the TV Demultiplexor 103 on separate well known data busses. As the streams 185 are received, the Selector 104 will be instructed by the TV Processor 112 to select particular streams to be output on its separate output data busses. In an alternative embodiment, the streams 185 are selected by a TV Profile Subsystem 110 (below). Some of these output busses will send the selected information streams 109A to the TV Multiplexor 113 for transmission to the TCDs 120. Other output busses will send the selected information streams 109A to the known TV Audio Output 105 and/or the TV Video Output 106 for output on the TV 100. The method for actually selecting the streams 109A of interest is described below.

The TV Multiplexor 113 will multiplex the selected information streams 109A from the TV Processor 112 with information streams 185 from the TV Selector 104 into Transport Streams 191 which can then be transmitted to the TCDs 120. The Transport Stream 191 is a well known format and can be found in the MPEG-2 Transport specification document. In this embodiment, the TV Multiplexor 113 novelly appends an Address Header field to the Transport Stream 191 packets 188 to identify the TCD120 which should receive the packets 188. In one preferred embodiment, each TCD is assigned an address that is used to determine which of the packets 188 are to be received. A two byte header is attached to the beginning of each packet 188. The first byte is the address of the TCD 120 and the second byte is a Linear Redundancy Check (LRC). The LRC is well known and is used to detect bit errors which may occur in the address. The (TCD) Demultiplexor 123 will only demultiplex and output the packet 188 if the Address of the packet matches the address assigned to the TCD 120. In an alternative embodiment, the address is inserted in the user fields defined in the MPEG-2 Transport Specification and is utilized in the same way. In an alternative embodiment, the Demultiplexor 123 demultiplexes all Information Streams 185 and the (TCD) Selector 124 compares the address of the Packet 188 to the address assigned to the TCD to determine if the stream 185 can be selected.

In another alternative embodiment, the PID of each Information Stream 185 is used to determine which TCD(s) 120 should receive the Information Stream 185. If the stream 185 was selected by the TV 100 for a particular TCD 120, then the TV Processor 112 will send a message to the (TCD) Processor 134 containing the PID of the streams 185 which the TCD 120 should receive. The Processor 134 will then instruct the Selector 124 to select the stream 185 which has that particular PID. If the stream 185 was selected by the TCD 120, then the Processor 134 will instruct the Selector 124 to select the stream 185 which has that particular PID.

These streams/segments 109A which are destined for the TCDs 120 will be broadcast via the known TV Transmitter 108 through the known TV output, e.g. Antenna 109. In some implementations of the improved television system 101, the TV Transmitter 108 and TCD Receiver 128 will be Infrared transmitters and receivers, fibre optic transmitters and receivers or coaxial drivers and receivers. In the former case, the signal will be transmitted through the air as in the case of the radio frequency broadcast described above. In the latter cases, either a fibre optic or coaxial cable will transport the Communication (Comm) Signal 140 from the Television 100 to the TCD 120. In some implementations, bi-directional communications is needed between the TV 100 and the TCD 120. In this case, the TV 100 will comprise a TV TCD Receiver 114 and the TCD 120 will comprise a Transmitter 135 utilizing any known communication technology, e.g. one of the technologies outlined above.

In one embodiment, each stream or segment 109A transmitted in this manner will contain an address 290 which identifies the TCD(s) 120 which it is destined for. The address 290 can identify all of the TCDs 120 in the system, a subset of them or a particular TCD 120. If the transmission does not include an address 290, then the Television 100 will broadcast the information streams 185 to all the TCDs 120. In one preferred embodiment, the television 100 will not be able to select streams 185 for individual TCDs 120. The TCDs 120 will have to either output all the information streams 185 transmitted by the television or it will have to use its own Selector 124 to select the streams 185 which will be output. In alternative embodiments, the PID of the information stream 185 can be used to identify streams 185 which the TV 100 has selected for the TCD 120.

Each TCD 120 will utilize its known Antenna 121 to receive the Comm Signal 140 which is transmitted from the TV 100. The received signal 140 will be demodulated by the Receiver 128 to recreate the Transport Stream 191 transmitted from the TV 100. In some embodiments where the signal is not modulated (e.g. some coax link technologies), the signal does not have to be demodulated by the Receiver 128. A (TCD) Demultiplexor 123 will demultiplex the received signal into individual video, audio and/or data streams and/or segments 123A. In some embodiments, the Demultiplexor 123 is a novel demultiplexor which can utilize the Address Header described above to determine if the information stream 185 transmitted from the TV 100 should be received by the TCD 120. It does this by comparing its assigned Address to the Address in the Address Header which is appended to each packet 188 in the Transport Stream 191.

Once demultiplexed, the (TCD) Selector 124 will select which streams 185 will be output by the device. The selected data and video streams 124A will be sent to a (TCD) output, e.g. a Video Output 126 for display on a (TCD) Screen 127. The (TCD) Screen 127 can be a CRT, a flat panel display, a thin film transistor (TFT) panel or any type of graphical display. The selected audio channel(s) 124A also will be sent to a TCD output, e.g. the Audio Output 125 to be output on headphones or speakers and/or the Video Output 126 after passing through a speech recognition system. As described above, these are known devices. Note that in alternative embodiments, one or more of the TCDs 120 would have only an audio output 125, e.g. if a first set of TCD 120 users 65 receives audio in a first language while a second set of TCD 120 users 65 watching the same TV 100 display receives audio in a second language. In another alternative embodiment, one or more of the TCDs 120 would only have a Video Output 126, e.g. where the TCD 120 users 65 are only interested in text information that supplements and/or augments the TV 100 video that is common to all the TCD 120 users 65.

The Selector 124 enables each individual user 65 of a TCD 120 to select parts and subparts (segments) of information streams (transport stream, streams, and/or segment) 185 transmitted by the Television 100. Selection of the streams (segments) (109A and/or 124A) to be output by the TCD 120 is performed by the Selector 124 and/or the TV selector 104 which can be controlled in many alternative ways. For example, a Menu Pointer 130 can be used to select an item from a menu which appears on either the TV Screen 107 or the TCD Screen 127. As described above, the TV Processor 112 will generate menus with the names of various streams which the user 65 can choose from. Once selected, the TCD Processor 134 will instruct the Selector 124 to output the selected stream(s) 185. Alternatively, a message can be sent from the TCD Processor 134 via the Transmitter 128 to the TV 100 instructing the TV Selector 104 to select a particular stream(s) 109A for the TCD 120.

The optional Keyboard 129 can also be used to identify a stream 185 to be output. The viewer 65 simply enters the name of the stream 185. As in the case of the Menu Pointer 130, the TCD 120 and/or the TV 100 will execute the selection 124 of the stream(s)/segments.

Finally, an optional Profile Subsystem 131 and/or an optional TV Profile Subsystem 110 can be configured to use the selector (124 and/or 104) to select streams of interest 185 to the viewer 65. In this case, the Selector 124 (TV Selector 104) will be automatically directed by the Profile Subsystem 131 (TV Profile Subsystem 110) to obtain these streams 185.

In one preferred embodiment, the Selector (104, 124) is controlled by a Profile Subsystem 131 (TV Profile Subsystem 110) which contains information of interest to the viewer 65. This information can include broad categories of interest (News, sports, weather), types of information (statistics, scores, financial) or specific information (person, place, things). The information, formally known as Profile Items (typically 605 below), is stored in a Profile Database 220. See Figure 4 below. Each Profile Item 605 contains a category, a keyword, and/or keyphrase which is compared to Identifiers (201A, 202A, and 203A in Figure 4 below) which identify the received streams 185. Identifiers (201A, 202A, and 203A) can be keywords or keyphrases within the information data streams 185 or can be generated by the Information Processor (111 and/or 134) described below.

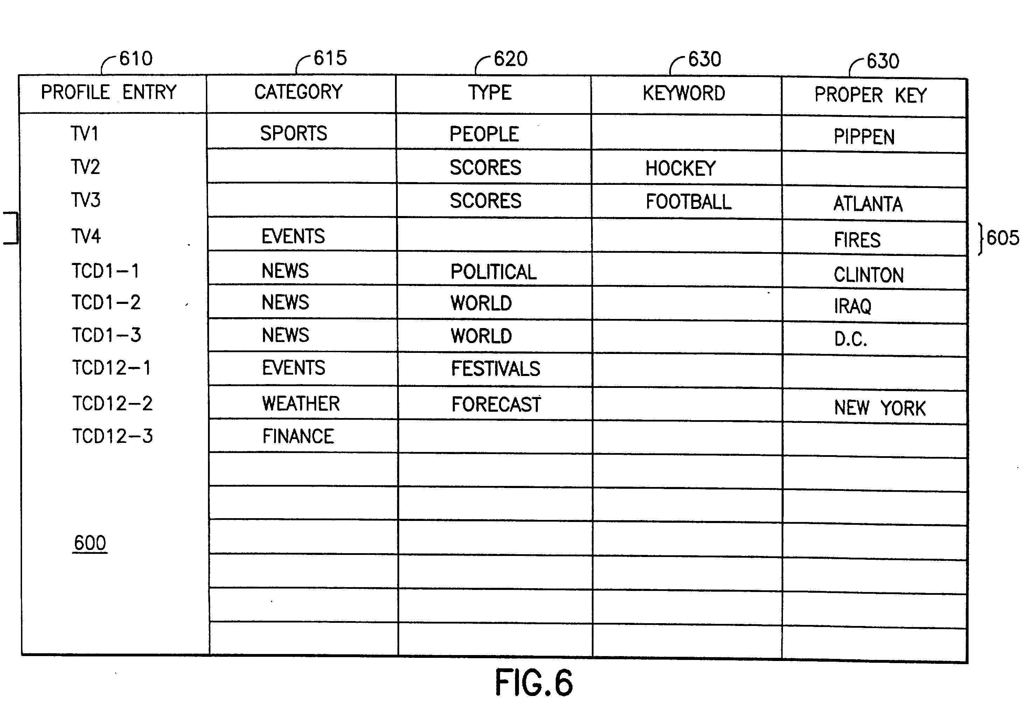

Figure 6 shows an example of a Profile 600 in a Profile Subsystem (110 and/or 134). In this embodiment, the Profile 600 is a database of a plurality of records, typically 605, each containing a category field 615, a Type field 620, and one or more fields with keywords and/or phrases 630. In this example, the general audience (television viewers) 65s are interested in any stream 185 of information related to Fires (entry TV 4). In the category of sports, the users 65s are interested in information on any sports person named Pippen (entry TV 1) 630, any hockey scores (entry TV 2) 630 and any football scores 630 of the Atlanta team(s) (entry TV 3) 630. The viewer of TCD 120 #1 is interested in world news 615 for Washington, DC 630 and Iraq 630 (entries TCD 1-3 and TCD 1-2) and any political news on Clinton 630 (entry TCD 1-1). The viewer of TCD 120 #12 is interested in any events related to festivals 620 (entry TCD 1-4), any weather 615 forecast 620 for New York 630 (entry TCD 12-1) and any information related to Finance 615 (entry TCD 12-2). In this embodiment, any combination of fields can be used to identify an area of interest. A Boolean AND operation is performed on the profile items 605 when more than one field (615, 620, 630) has an entry.

As streams 185 are Received 128 and Demultiplexed 123, the Profile Subsystem 131 and/or TV Profile Subsystem 110 will search for matches between the received information streams 185 and the profile items 605 in the Profile Database 220. The TV Profile Database 220 contains Profiles 600 for the TV 100 itself and, optionally, for one or more of the TCDs 120. The profiles 600 for the TV 100 comprises profile items 605 of interest to the general television viewing audience 65. The profiles 600 for the TCDs comprise profile items 605 of interest to each of the individual viewers 65 in the system. In addition, profile items 605 for a group of individual viewers 65s can be described. The Profile Item Comparator 221 will perform the actual comparison as described below.

In one preferred embodiment, a match of all fields ( 615, 620, and 630) in the profile item 605 has to occur before there is a match. When a match is found, the selector (104 and/or 124) will be instructed to select the identified stream(s) or segment(s) (109A and/or 124A) by using the PID to identify the stream 185. As described above, the TV 100 will transmit the selected stream(s) and/or segments 109A to the appropriate TCDs 120. In some embodiments, the TCD 120 will comprise a Profile Subsystem 131 which is the same as the TV Profile Subsystem 110 but which contains a profile 600 for the TCD 120 only.

The optional TV Information Processor 111 will process the incoming video, audio and/or data streams 185 in search of information relevant to the viewers. For instance, image processing can be used to identify a highlight of a football game. If a viewer were interested in such an event, the TV Profile Subsystem would be configured to indicate this. When the TV Information Processor 111 identified the event, it would output an Identifier (201A, 202A, 203A) which will be compared by the Profile Item Comparator 221 to Profile Items 605 in the Profile Database 220. If a match is found, the Profile Item Comparator 221 will cause the TV Selector 104 to choose the appropriate stream(s) 185 and transmit them to the appropriate TCD 120. As described above, the TCD 120 would then output the stream(s) 185 for the viewer 65. Alternatively, the Information Processor 132 located in the TCD 120 can process the incoming stream(s) 185 and identify stream(s) of interest 185 to this particular viewer 65. In this case, the Selector 124 would be instructed to select the appropriate stream(s) 185.

The TV Information Processor 111 and Information Processor 132 can utilize various technologies to process and identify streams of interest 185 to the viewers 65. This is shown in Figure 4. The Image Processor 202 can be used to identify a person, place, thing, action, or event which can be compared to the profile items 605 in the profiles 600. For example, the IBM Query by Image Content technology can identify a particular color or texture in an image. Similarly, the Audio Processor 201 will use speech recognition to generate a searchable transcript for key word searching, audio processing to determine the type of audio including any one or more of the following: speech, music, noise and sounds and speaker identification processing to determine the identity of a particular speaker. IBM s Via Voice product, for instance, can generate text from the spoken word. Finally, the Text Processor 203 can be used to reduce the incoming data information into a searchable hit list of one or more words. The Identifiers (201A, 202A, 203A) generated by these processors (201, 202, 203) are sent to the Profile Item Comparator 221 to be compared to items in the Profile Database 220. Each Identifier (201A, 202A, 203A) is compared to each entry in the profile 600. If all the entries in a record 605 are found in the set of Identifiers (201A, 202A, 203A) generated for a particular Information Stream 185, then that Information Stream 185 is selected and sent to the TV 100 or TCD 120 identified in the label of the entry 605. A match in this comparison will result in an output on the Selector Control 231 signal which will instruct the TV Selector 104 or Selector 124 to select the appropriate stream(s) 185. In an alternative embodiment, the Information Stream 185 will be selected if a subset of the Identifiers (201A, 202A, 203A) for the Information Stream 185 matches any arbitrary subset of the fields ( 615, 620, and 630) in the profile item 605. The technologies utilized in the TV Information Processor 111 are all known.

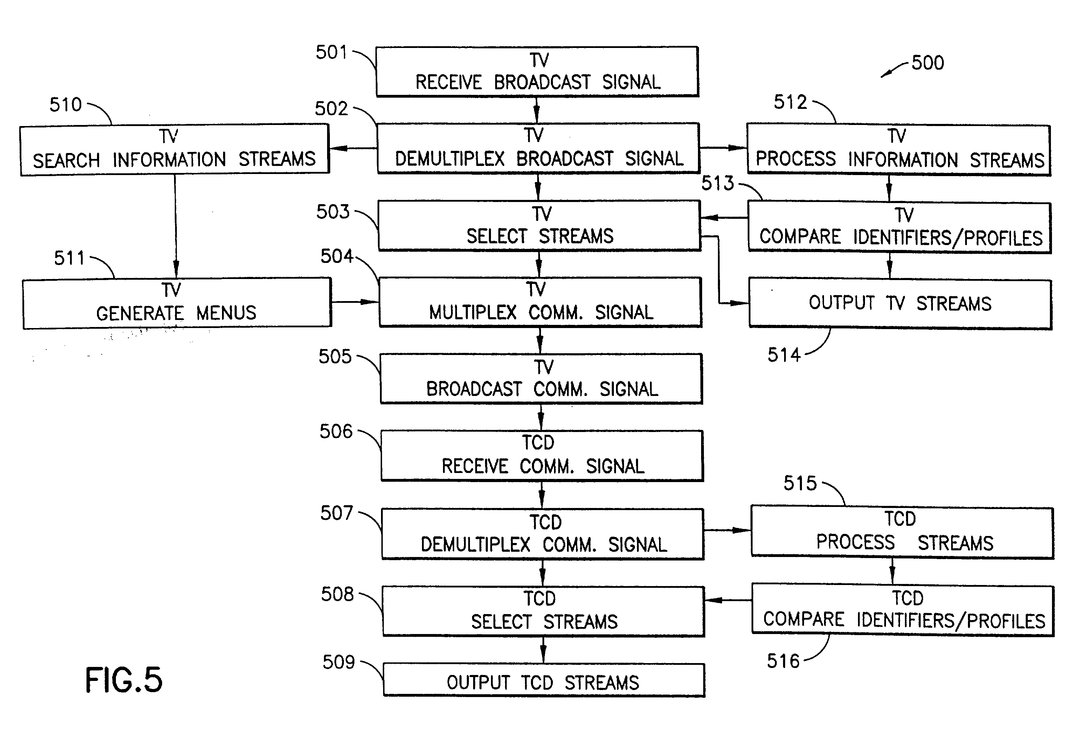

As an example of the improved television system 101, assume three television stations are broadcasting on different VHF channels: channels 3, 4 and 9. In this scenario, channel 3 is broadcasting a football game complete with highlights (NFL) and scores from other games in a data stream (SCORES). It is also transmitting news updates on a separate data channel (NEWSUP). Channel 4 is broadcasting a news program (NEWS), a news magazine show (NEWSMAG) and a documentary on U. S. Presidents (DOC). Channel 9 is broadcasting a movie in high-definition format (MOVIE). The profile 600 is configured as in the example above. There are two TCDs 120 receiving broadcasts from a television 100. Each TCD 120 has all of the optional components described above. Figure 5 is a flowchart of the processes which occur in the improved television system 101.

Figure 5 is a flow chart of one preferred selection process 500 that is used to performed by the system 101. This process 500 is now explained by way of example. As the broadcasts are received, the TV Receiver 102 demodulates 501 the three broadcast signals to recreate the original digital Transport Stream signals 191. The TV Demultiplexor 103 will then demultiplex 502 the signals to recreate the following information streams: NFL, SCORES, NEWSUP, NEWS, NEWSMAG, DOC, and MOVIE. All of these streams 185 will be sent to the Selector 104 for selection 503. Simultaneously, the TV Information Processor 111 is processing 512 each of the incoming streams 185 and creating identifiers (201A, 202A, 203A) which are used by the Profile Comparator 221 to determine 513 which streams 185 are to be output (105, 106, 125, and 126). These items are sent to the TV Profile Subsystem 110 for use in the selection process. The TV Processor 112 is also parsing 510 the data streams 185 to search for categories 615, types 620, and/or keywords and keyphrases 630 which are indicative of the content of each information stream 185. In addition, the TV Processor 112 will also create menus 511 of the categories 615, types 620, and/or keywords and keyphrases 630 identified and will display them on the Television 100 and TCDs 120 to allow the viewers to select streams of interest 109A and 124A.

In this example, the TV Information Processor 111 has generated the Identifier (201A, 202A, 203A) FIRE from the news program (NEWS) after it has generated the Identifier (201A, 202A, 203A) ATLANTA FOOTBALL from the NFL program (NFL). The TV Processor 112 has also discovered the Identifier (201A, 202A, 203A) CLINTON in the documentary program (DOC) and the Identifiers (201A, 202A, 203A) EVENTS FESTIVAL from the movie program (MOVIE). All of these Identifiers (201A, 202A, 203A) keywords are sent to the TV Profile Item Comparator 221.

The TV Profile Subsystem 11.0 is continuously comparing the received Identifiers (201A, 202A, 203A) to the profile items 605 in the TV Profile Database 220. After finding a match between the Identifier (201A, 202A, 203A) ATLANTA FOOTBALL and Profile 600 entry TV 3 (620, 630), the TV Profile Subsystem 110 will instruct the TV Selector 104 to select 503 the football program (NFL) for the TV 100. Later, when the FIRE Identifier (201A, 202A, 203A) is generated, the TV Processor 112 will generate a menu 511 to be displayed on the TV Screen 107. This will alert the TV 100 viewers that a fire is being referred to on the news program (NEWS) and will allow them to switch to this program. In addition, the TV Profile Subsystem 110 will instruct the TV Selector 104 to select 503 the documentary (DOC) for TCD 120 #1 and the movie (MOVIE) on channel 4 for TCD 120 #12. The streams selected for the TCDs 120 are sent to the TV Multiplexor 116 where the addresses of each of the TCDs 120 are appended to the streams. The TV Multiplexor 116 will multiplex 504 these streams destined for the TCDs 120 together with the menus generated 511 by the TV Processor 112. The Transport Stream 191 which is generated is then transmitted 505 to the TCDs 120 via the TV Transmitter 108 and the TV Antenna 109.

As described previously, the TCDs 120 will receive 506 the Comm Signal 140 via the Antenna 121 and will demodulate 506 the signal to create the original Transport Stream 191. The Demultiplexor 123 will demultiplex 507 the Transport Stream 140 into the individual information streams 185 and will compare the address of each stream with the address of the TCD 120. When a match is found, the Demultiplexor 123 will forward the stream to the Selector 124. The Selectors 124 in TCDs 120 #1 and #12 will send the selected 508 information stream(s) 185 to the appropriate device (125, 126) for output 509. Additionally, the Information Processor 132 and Processor 134 in the TCD 120 may also generate 515 Identifiers (201A, 202A, 203A) on the information streams 185 received from the TV 100. Similar to the operation described above, the Profile Subsystem 131 will compare Identifiers (201A, 202A, 203A) and will instruct 516 the Selector 124 to select 508 one or more of the information streams 185 for output 509 on the TCD 120 if a stream(s) 185 of interest to the viewer 65 have been found.

Other capabilities enabled by the improved television system include the ability to exchange information between TCDs 120. In this case, messages typed on the Keyboard 129 will be input to the Processor 134. The Processor 134 will format the message, embed the address of the TCD(s) 120 which should receive the message and transmit the message via the Transmitter 128. This will allow individuals 65 viewing a television broadcast to exchange messages with other viewers 65 while viewing a television broadcast.

In addition, the Processor 134 can run applications such as games via the Processor 134. The broadcaster is also able to provide auxiliary information which can allow the viewer to play along with a game show being broadcast. This personalized version of the game would allow the viewer 65 to guess answers before the results were revealed on the show.

The improved TV 100 will also provide access to the internet to obtain supplemental information. A viewer 65 can send an internet request by either typing the URL on the Keyboard 129 or by using the Menu Pointer 130 to select a URL displayed on either the TV Screen 107 or the TCD Screen 127. The Processor 134 will create a request message and transmit it to the TV 100. The TV 100 will receive the message as described above and will instruct the Internet Interface 115 to retrieve the web pages from the appropriate Internet site. Once obtained, the Internet Interface 115 will forward the pages to the TV Processor 112. The TV Processor 112 will either transmit the pages to the TCD 120 for output or will display them on the TV Screen 107. The processes for retrieving information from the Internet are well known.

## Claims

1. A television comprising:
a television receiver for receiving a broadcast signal having one or more types of information, each information type having one or more segments; and
a television transmitter for transmitting a send signal to one or more television companion devices.

2. A device, as in claim 1, where the types of information include any one or more of the following: a video channel, an audio channel, a data channel, one or more graphical images, and one or more animated images.

3. A device, as in claim 1, where the segments include any one or more of the following: an audio clip, a video segment, a still image, and a stream of text.

4. A device, as in any preceding claim, where the communication link is any one or more of the following: an infra red link, a radio link, a fibre optic link, and a coaxial link.

5. A device, as in any preceding claim, where the output includes any one or more of the following: a video output, an audio output, and a text output.

6. A television (TV) comprising:
a television receiver for receiving a broadcast signal having one or more types of information, each information type having one or more segments; and
a demultiplexer that demultiplexes the broadcast signal into one or more of the types of information; and
a television transmitter capable of transmitting one or more of the types of information to one or more television companion devices.

7. A device, as in claim 6, further comprisng:
a selector that selects two or more segments from one or more of the types of information, one or more of the segments being TV displayed segments that are displayed on an output of the TV.

8. A device, as in claim 7, where the television transmitter is sending one or more segments that are different than the TV displayed segments.

9. A device, as in claim 7, further comprising a selector input that controls the selector.

10. A device, as in claim 7, where the selector further comprising a Profile Subsystem which contains a profile of profile items in a database of information, the profile describing interests of one or more groups of viewers, each group having one or more viewer, and the Profile Subsystem controlling selection of one or more of the segments if the segments contain one or more profile items.

11. A device, as in claim 10, further comprising a Processor Subsystem having one or more processors which process any one or more of the following segments before selecting the segments: a video segment, an audio segment and data segment.

12. A device, as in claim 11, where one or more audio segments are processed by using speech recognition to generate a searchable transcript for key word searching.

13. A device, as in claim 11, that uses audio processing to determine the type of audio including any one or more of the following: speech, music, noise and sounds and using speaker identification processing to determine the identity of a particular speaker.

14. A device, as in claim 11, where one or more video segments are processed by using image processing to identify a searchable person, place, thing, action, or event.

15. A device, as in claim 11, where one or more data segments are processed by using text processing to generate a searchable hit list of one or more words.

16. A device, as in claim 11, where the Processor Subsystem generates identifiers from the processed segments, the identifiers being used by the Profile Subsystem to control the selection.

17. A device, as in claim 11, where the selector has a selector input that is any one or more of the following: mouse, keyboard, screen, and pointer.

18. A television system comprising:
a television comprising:
a television receiver for receiving a broadcast signal having one or more types of information, each information type having one or more segments; and
a demultiplexer that demultiplexes the broadcast signal into one or more of the types of information;
a selector that selects one or more segments from one or more of the types of information; and
a television transmitter capable of transmitting one or more of the segments to one or more television companion devices;
one or more television companion devices (TCDs) comprising:
a communication interface capable of receiving a signal from a television set;
an output that presents one or more of the segments.

19. A television system, as in claim 16, where the television transmitter identifies one or more of the TCDs as a subset of addressees to receive the segments.

20. A television system, as in claim 18, that further comprises a multiplexer that multiplexes one or more of the segments transmitted from the television transmitter.

21. A television system, as in claim 20, where the multiplexer adds one or more addresses to one or more of the segments.
